# EUROPEAN PATENT APPLICATION

(11) **EP 4 481 243 A1**
(43) Date of publication of application: **25.12.2024**
(21) Application number: 23181100.1
(22) Date of filing: 22.06.2023
(51) Int. Cl.: F16J 15/00, B25J 19/00

(54) **A ROBOT**

(71) Applicant: YASKAWA Europe GmbH, 85391 Allershausen (DE)
(72) Inventor: JEZER EK, Dominik, 1330 Kocevje (SI); ATSUSHI, Ichibangase, 1330 Kocevje (SI); JEVNIKAR, Miha, 1330 Kocevje (SI); KOSLER, Hubert, 1330 Kocevje (SI); WAIBEL, Andreas, 85391 Allershausen (DE)
(74) Representative: Behr, Wolfgang

(57) **Abstract**

The present application shows a robot (1) having at least a first (3) and a second member (2) connected by rotatable joint, the joint comprising a sealing arrangement comprising at least a first sealing element (10) for sealing a gap between the first and the second member, wherein the first member comprises a recessed seat provided in a circumferential wall for accommodating a body of the first sealing element (11) and the second member comprises a radial sealing surface (22) in contact with a sealing lip (12) of the first sealing element extending from the body of the first sealing element towards the radial sealing surface, wherein the outer surface of the sealing lip continuously extends from the outer surface of the body of the first sealing element radially outwards towards the radial sealing surface and/or the tip of the sealing lip extends to a radial position that is more distant from the axis of the joint than an outer surface of the body of the first sealing element.

## Description

The present invention relates to a robot having at least a first and a second member connected by a rotatable joint, and in particular to the sealing arrangement between the first and the second member.

Document DE 103 48 841 B4 shows a radial sealing arrangement for the joint of a robot, where a sealing lip is in sliding contact with a circumferential wall section of one of the members for sealing the joint. Such a sealing solution results in a large extension of the sealing arrangement, and further does not provide an ideal solution regarding a hygienic design as well as low particle emissions.

In order to avoid these problems, document EP 1 894 684 B1 teaches to use an axial sealing arrangement, where the sealing lip of the outer sealing element is in contact with an axial sealing surface. In this document, for the outer axial sealing element, a typical V-type sealing ring is used.

The object of the present invention is to provide a robot having an improved sealing arrangement.

Possible goals of the present invention are ensuring a hygienic design of the gap between the two opposing rotating members, providing a waterproof design and/or ensuring a sufficiently low particle emission for clean room operation.

The above object is solved by a robot according to the independent claims of the present invention.

Preferred embodiments are the subject matter of the dependent claims.

In a first aspect, the present invention comprises a robot having at least a first and a second member connected by rotatable joint, the joint comprising a sealing arrangement comprising at least a first sealing element for sealing a gap between the first and the second member, wherein the first member comprises a recessed seat provided in a circumferential wall for accommodating a body of the first sealing element and the second member comprises an axial sealing surface in contact with a sealing lip of the first sealing element extending from the body of the first sealing element towards the axial sealing surface. The first aspect is characterized in a first variant in that the outer surface of the sealing lip continuously extends from the outer surface of the body of the first sealing element radially outwards towards the axial sealing surface. In a second variant, which may be provided independently from the first variant or combined therewith, the tip of the sealing lip extends to a radial position that is more distant from the axis of the joint than an outer surface of the body of the first sealing element.

The inventors of the present invention have realized that the standard V-seals used in the prior art EP 1 894 684 B1 present a hygienic risk due to the V-shaped groove on the outer surface, with an angle of 90° or less, and have therefore designed a new shape for the axial sealing element that is better to clean.

In an embodiment of the second variant, the tip of the sealing lip extends to a radial position that is more distant from the axis of the joint than an outer surface of the body of the first sealing element where the outer surface of the body of the first sealing element connects to an outer surface of the first member.

In an embodiment, the outer surface of the body of the first sealing element has, in a cut along an axial direction of the joint, an essentially flat part extending at an angle of less than 30° with respect to the axial direction, preferably at an angle of less than 10°, further preferably extending essentially in the axial direction.

In an embodiment of the second variant, the tip of the sealing lip extends to a radial position that is more distant from the axis of the joint than an outer surface of the body of the first sealing element on the lip-side of the essentially flat part.

In an embodiment, the outer surface of the sealing lip continuously merges into the essentially flat part in a curved section.

In an embodiment, a line tangential to the curved section has at every position an angle with respect to an axial direction of the joint of not more than 30° towards a radial inside in the direction towards the axial sealing surface, preferably no more than 20° and no more than 10° and further preferably is directed towards the radial outside in a direction towards the axial sealing surface.

In an embodiment, the essentially flat part forms the entire outer surface of the body of the first sealing element.

In an embodiment, the outer surface of the first sealing element is formed by the outer surface of the lip, the essentially flat part and the curved section connecting the two.

In an embodiment, the essentially flat part reaches to an axial end or side wall of the sealing element on the non-lip side and/or flushly connects to the outer surface of the first member.

In an embodiment, the essentially flat part has an essentially cylindrical shape.

In an embodiment, the essentially flat part is a flat part, preferably a cylindrical part.

In an embodiment, the outer surface of the sealing lip extends to tip of the sealing lip at an angle with respect to the flat part which is bigger than 90°, preferably bigger than 110°, preferably bigger than 120°.

In an embodiment, the outer surface of the sealing lip continuously extends from an essentially cylindrical part of the outer surface of the body radially outwards towards the axial sealing surface.

In an embodiment, the tip of the sealing lip extends to a radial position that is more distant from the axis of the joint than an essentially cylindrical part of the outer surface of the body.

In an embodiment, the outer surface of the sealing lip merges into an essentially cylindrical part of the outer surface of the body of the first sealing element by a curved section, wherein a line tangential to the curved section extends at an angle with respect to an axial direction of the joint that has at every position an angle of not more than 30° towards a radial inside in the direction towards the axial sealing surface, preferably not more than 20° or 10° and further preferably is directed towards the radial outside towards the axial sealing surface,

In an embodiment, the radial distance between the tip of the sealing lip and the outer surface of the body of the first sealing element is at least at least 2 % and/or at maximum 20% of an axial extension of the sealing lip, preferably at least 5 % and at maximum 10 %.

In an embodiment, the outer surface of the sealing element is formed by an essentially cylindrical portion to which the outer surface of the sealing lip continuously adjoins in a curve extending radially outwards towards the axial sealing surface.

According to a second independent aspect, the present invention comprises a robot having at least a first and a second member connected by rotatable joint, the joint comprising a sealing arrangement comprising at least a first sealing element for sealing a gap between the first and the second member, wherein the first member comprises a recessed seat provided in a circumferential wall for accommodating a body of the first sealing element and the second member comprises an axial sealing surface in contact with a sealing lip of the first sealing element extending from the body of the first sealing element towards the axial sealing surface.

The second aspect is characterized in that the first sealing element has at least two sealing lips extending from the body of the first sealing element at a radial distance to each other towards the axial sealing surface.

Providing at least two sealing lips will improve the sealing properties of the first sealing element and uses the space available for the sealing element in a particularly effective manner.

In an embodiment, the first sealing element has exactly two sealing lips. In alternative embodiments, the first sealing element has more than two sealing lips, e.g. three or four sealing lips.

In an embodiment of the second aspect, the two sealing lips and the body of the first sealing element are integrally formed.

In an embodiment of the second aspect, the inner surface of the inner sealing lip continuously extends radially outwards towards the axial sealing surface, wherein preferably the inner surface of the inner sealing lip extends continuously or with a step from a bottom surface of the body of the first sealing element.

The first and the second aspect of the present invention are independent from each other. However, the second aspect may be combined with the first aspect according to a preferred embodiment.

According to a third independent aspect, the present invention comprises a robot having at least a first and a second member connected by rotatable joint, the joint comprising a sealing arrangement comprising at least a first sealing element for sealing a gap between the first and the second member, wherein the first member comprises a recessed seat provided in a circumferential wall for accommodating a body of the first sealing element and the second member comprises an axial sealing surface in contact with a sealing lip of the first sealing element extending from the body of the first sealing element towards the axial sealing surface.

The third aspect is characterized in that the axial sealing surface is provided on an axial plate member connected to an axial end surface of a housing of the second member.

Providing the axial sealing surface on an axial plate member connected to an axial end surface of a housing of the second member will make it easier to provide the axial sealing surface with a high surface quality, for example by processing the axial sealing surface or providing the axial plate member from a different material than the housing. Further, it will improve the accuracy in positioning the axial sealing surface.

In an embodiment of the third aspect, the axial plate member has an outer circumferential surface flushly transitioning to an outer surface of the housing of the second member.

The third aspect and the first and the second aspect of the present invention are independent from each other. However, the third aspect may be combined with the first aspect or the second aspect or a combination thereof according to a preferred embodiment.

Preferred configurations of a robot according to the first, second and/or third aspect or combinations thereof are described in the following:
In an embodiment, the recessed seat has a bottom wall and an axial side wall opposite the side of the side of the lip, and is open on the side of lip in an axial direction, with the lip extending from the body arranged in the recessed sear towards the axial sealing surface through the open axial side of the recessed seat.

In an embodiment, the outer surface of the body of the sealing element flushly transitions to an outer surface of the circumferential wall section of the first member at a position opposite the axial sealing surface. This will improve the cleaning properties of the joint.

In an embodiment, an axial side surface of the body of the first sealing element abuts with an axial side surface of the recessed seat.

In an embodiment, the bottom of the recessed seat provided in the circumferential wall section of the first member accommodating the body of the first sealing element has, at least in parts, a chamfer shape extending radially inwards towards the side wall of the recess opposite the sealing lip, the chamfer urging the body of the first sealing element into contact with the side wall. This features may also be provided independently from the characterizing features of the above described aspects for any robot according to the preamble of the independent claims.

In an embodiment, the chamfer extends over the entire length of the bottom wall of the recessed seat.

In an embodiment, the chamfer is arranged on the side of the lip in a part of the bottom wall.

In an embodiment, the first sealing element is mounted on the recessed seat with a radial preload. The radial preload will ensure the sealing of the first sealing element in the recessed seat, and create sufficient friction in order to avoid a rotation of the first sealing element on the seat. The preload is provided by having a first sealing element which, before it is mounted on the seat, has an inner diameter that is smaller than the outer diameter of the seat.

If a chamfer is provided, the radial preload will also create an axial preload towards the non-lip side.

In an embodiment, the sealing arrangement comprises a second sealing element for sealing the gap between the first and the second member, the second sealing element being arranged inside with respect to the first sealing element.

The second sealing element will stop oil or grease provided inside the gap from entering the space between the second and the first sealing element. The first sealing element will provide a good cleanability of the robot from the outside, and further improve the sealing of the joint.

In an embodiment, the second sealing element is mounted on a second seat of the first member and a sealing edge of the second sealing element is in sliding contract with a second sealing surface of the second member. This provides for a compact sealing arrangement.

In an embodiment, the second seat and the recessed seat accommodating the body of the first sealing element are arranged on an inside and an outside of a housing of the first member in an axially overlapping position.

In an embodiment, the second sealing surface is a circumferential surface, i.e. the second sealing element is a radial seal.

In an embodiment, the second sealing surface is provided by a section of the axial plate member that also provides the axial sealing surface, preferably on a section extending in an axial direction from the axial sealing surface.

In an embodiment, the sealing arrangement comprises a third sealing element for sealing the gap between the first and the second member, the third sealing element being an oil seal arranged on an inside with respect to the second sealing element.

In an embodiment, the robot comprises a plurality of rotatable joints, for example at least four rotatable joints or at least six rotatable joints.

In an embodiment, a plurality of the rotatable joints and preferably all the rotatable joints are provided with a sealing arrangement as defined above for the joint between the first and the second member.

The axial sealing surface preferably extends in a plane that is perpendicular to the axis of the joint. The axial sealing surface may in particular have a ring shape coaxial with the axis.

In an embodiment, the body of the first sealing element is defined as the part of the first sealing element where the first sealing element rests on the bottom wall of the recessed seat and/or the part of the first sealing element from which the two sealing lips and the space between the two sealing lips extend towards the side of the axial sealing surface.

In an embodiment, the body of the first sealing element has the shape of a ring and/or a hollow cylinder coaxial with the axis of the joint.

In an embodiment, the outer surface of the ring and/or a hollow cylinder is the essentially flat part of the outer surface discussed above.

In an embodiment, a first axial side wall of the body on the non-lip side abuts with a side wall of the recessed seat.

In an embodiment, the lip or lips extend from a second axial side of the body towards the axial sealing surface.

In an embodiment, the lip or lips and the body of the first sealing element are formed integrally.

In an embodiment, the first sealing element is formed from an elastomeric material.

The present invention further comprises a first sealing element for a robot as defined above.

In particular, the first sealing element comprises a body mountable to a seat with its circumferential bottom wall and having a sealing lip extending from the body in an axial direction.

In a first aspect, the outer surface of the sealing lip continuously extends from the outer surface of the body of the first sealing element radially outwards in a direction away from the body and/or the tip of the sealing lip extends to a radial position that is more distant from the axis of the circumferential bottom wall of the body than an outer surface of the body of the first sealing element.

In a second aspect, the first sealing element has at least two sealing lips extending from the body of the first sealing element at a radial distance to each other in an axial direction.

The first sealing element is preferably configured as described above with respect to the inventive robot.

The present invention is now described with respect to specific embodiments and drawings.

In the drawings,
- Fig. 1:: shows an embodiment of an inventive robot,
- Fig. 2:: shows a cross-section through a joint of the inventive robot showing a first embodiment of the inventive sealing arrangement,
- Fig. 3:: is an enlarged view of the sealing arrangement shown in Fig. 2,
- Fig. 4: shows a cut through a joint having a second embodiment of an inventive sealing arrangement,
- Fig. 5:: shows an enlarged view of the sealing arrangement shown in Fig. 4, and
- Fig. 6:: shows a further enlarged view of the configuration of the first sealing element of the embodiments shown in Figs. 2 - 5.

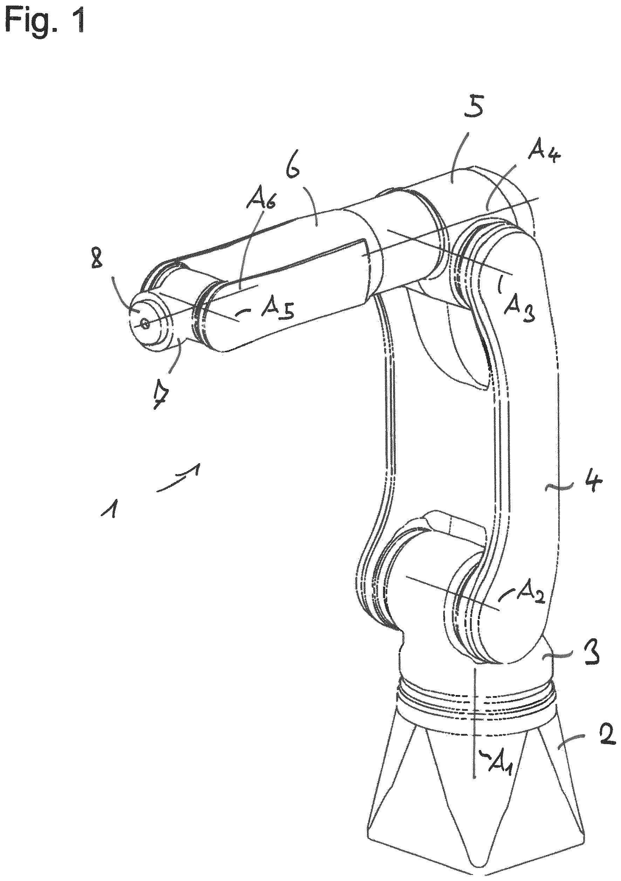

Fig. 1 shows an embodiment of a robot according to the present invention.

The robot 1 comprises the ground-fixed member 1 and a robot arm comprising six or seven axes. Each of these axes consists of a fixed member and a rotating member.

The joints provided between the members are rotating mechanisms that contain bearings to support radial loads, which usually consist of an inner ring and an outer ring. These bearings also contain grease to reduce friction and particle emissions. Further, the joints may comprise a gear for driving the joint and/or a motor for driving the joint.

In particular, as shown in Fig. 1, the robot comprises a plurality of members 2-8, which are interconnected by rotatable joints A1 - A6. In the embodiment, the robot comprises a base 2, to which a first member 3 of the robot arm is connected by a vertical axis A1. Arm elements 4, 5, 6 and 7 of the robot arm are connected to each other, in this order, by the rotatable axes A2 - A5. The last rotatable member 8, to which an end effector can be mounted, is connected to member 7 by the last rotatable axis A6.

The present invention is however not restricted to robots having the specific configuration shown in Fig. 1. For example, the present invention can also be used for any other six-axis robot, as well as for robots having less than six axes or more than six axes, such as a four-axis robot or a seven-axis robot.

Oil seals are essentially components used to prevent the leakage of grease and particle emissions generated by internal components such as gears, preventing them from escaping outside of the robot. Additionally, the oil seals serve the purpose of preventing any external substances from entering the robot.

In prior art solutions, radial shaft seals were used as oil seals, with a sealing edge of the oil seal contacting an outer radial surface of the shaft of the joint. This design led to a narrow and deep slot arranged next to an axial side surface of the radial shaft seal, which is inaccessible for cleaning.

The present invention relates to the sealing arrangement comprising an axial sealing element for sealing a gap between two members of the robot connected by a rotatable joint.

The inventive sealing arrangement is preferably used for all the rotatable joints of the robot. In possible embodiments, however, the sealing arrangement is only used for one of the joints of the robot, or a subset of its rotatable joints.

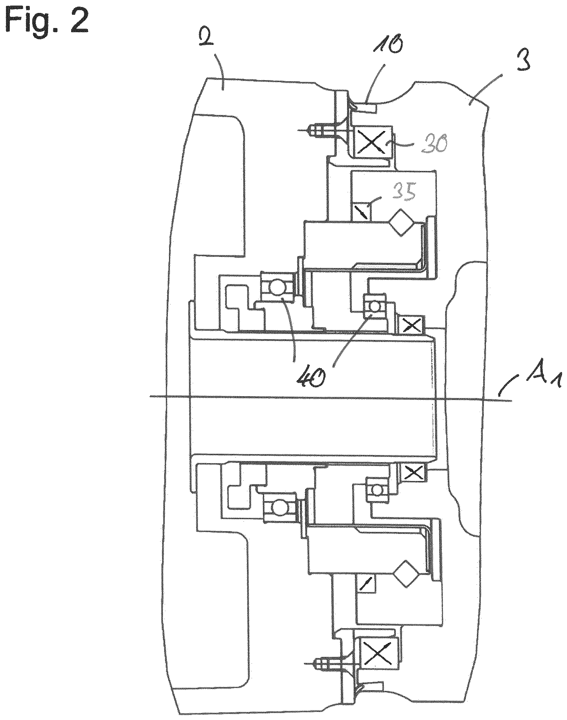

The embodiments described with respect to Figs. 2 - 6 all show the configuration of the inventive sealing arrangement with respect to the joint between members 2 and 3 of the embodiment shown in Fig. 1. However, the same sealing arrangement can also be used for all the other joints.

A first embodiment of the sealing arrangement used in the inventive robot is shown in Figs. 2, 3 and 6. The sealing arrangement provides a seal between the members 2 and 3 connected by the rotatable joint of rotatable axis A1.

The sealing arrangement comprises at least a first sealing element 10. The first sealing element 10 is an axial sealing element and comprises a body 11 by which it is mounted in a recessed seat provided in the first member 3, the seat formed by bottom wall 14 and side wall 15 of the corresponding recess, and a sealing lip 12 extending from the body 11 towards an axial sealing surface 22 provided on the second member 2. The sealing lip 12 is in sliding contact with the axial sealing surface 22 to provide a sealing of the gap between the members 2 and 3.

Several aspects of the present invention are provided in combination in the embodiment shown, and features of these aspects described in the following with respect to the embodiment. The aspects and features provided in combination in the embodiment can however also be used independently from each other.

The sealing element 10 comprises at least one flexible lip 12, which contacts the axial sealing surface 22 with sufficient contact force to provide a tight sealing.

The outer surface of the sealing lip 12 forms a curved surface extending, from where the sealing lip 12 merges with the body 11, in a continuous arc towards the outside in a cut along the axial direction. Thereby, the outer surface for sealing element 10, which is formed by the outer surface 18 of the body 11 and the outer surface of the lip 12, can be easily cleaned.

In particular, in contrast to commercially available axial shaft seals using a V-ring, the inventive first sealing element avoids the V-shaped groove on the outer surface between the sealing lip and the body of the sealing element, which has, in the prior art, an angle of 90 degrees or less, and therefore presents a hygienic risk. Further, the body of the first sealing element 18 is thinner than traditional V-ring sealing elements. The present invention thereby provides a new axial seal, which is flatter than a normal V-ring and does not have any sharp edges on the outside.

In the embodiment shown, the first sealing element 10 does not only comprise the outer lip 12, but in addition a second inner lip 13, which equally extends from the body 11 of the first sealing element towards the axial sealing surface 22. The second inner lip 13 improves the sealing provided by the sealing element by increasing the contact with the axial sealing surface 22.

In the embodiment, just as the outer surface of the sealing lip 12 extends continuously from the outer surface 18 of the body 11 in an arc towards the outside, the inner surface of the inner sealing lip 13 extends, from the bottom surface of the body 11, in a continuous arc towards the outside. Further, the inner side of the outer lip 12 and the outer surface of the inner lip 13, which face each other over a gap, are curved to the outside.

Providing the two lips, both facing outward, enhances the seal's performance. This configuration allows to reduce particle emissions from the robot.

The preload of the seal, i.e. the deformation of the sealing lip by its contact with the axial sealing surface 22, is controlled by the tolerance gap in the assembly. The sealing element is designed to apply a preload to the sealing lip, ensuring continuous contact with the axial sealing surface. Even with maximum preload, the outer diameter of the seal, i.e. the position of the tip of the sealing lip 12, remains smaller than the outer diameter of the axial sealing surface 22, preventing the sealing lip from extending beyond the edge of the axial sealing surface.

The shape of the two lips, which essentially extend in parallel with a gap therebetween, prevents the two lips from attaching to each other even under maximum preload.

The flexibility of the sealing lips 12 and 13 tolerates deviations in the mutual distance between the first and the second member 2 and 3 of up to +/- 0.5 mm, which may result from tolerances in the assembly of the parts that affect the gap size between the two members due to the assembly process. The orientation and curvature of the sealing lips also play an additional role in providing the sealing effect, as the contact force between the lips and the axial contact surface naturally increases when higher pressure occurs on the robot's external side.

The sealing lips have, in an axial cut, a thickness that increases from the tip of the sealing lip towards the position where the respective sealing lip merges with the body 11 of the sealing element. In particular, the thickness of the sealing lips increases continuously towards the body 11.

The outer surface 18 of the body 11 has an essentially cylindrical shape, with a smooth transition to the external surface 16 of the first member 3, as well as a smooth transition with the external surface of the outer sealing lip 12.

The general shape of the body 11 is equally essentially ring-like or cylindrical, but with the bottom surface having a taper, just as the bottom wall 14 of the recess providing the seat geometry.

The sealing lips and the body 11 are provided as an integrally formed sealing element, in particular made from an elastomeric material.

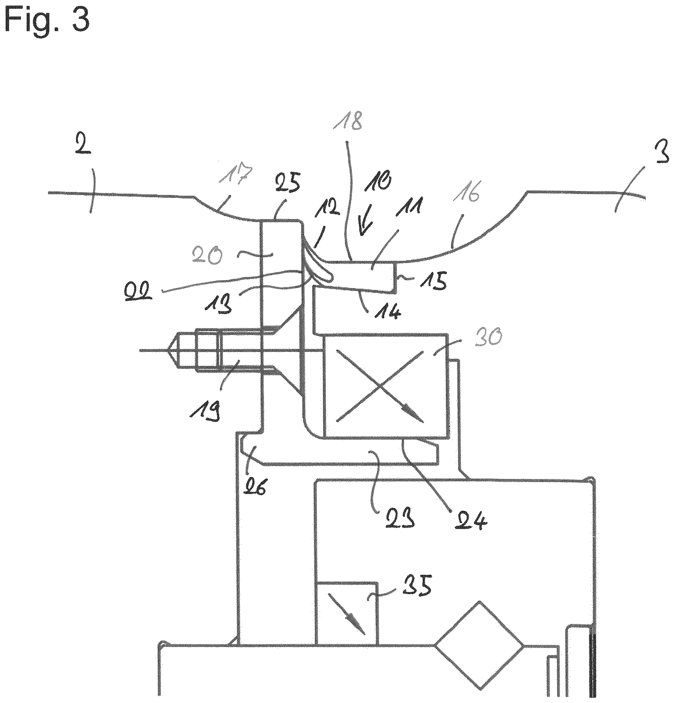

In the embodiment shown in figures 2 and 3, the outer lip 12 of the first sealing element 10 performs the main sealing function, while the second, inner lip 13 is intended to improve functionality.

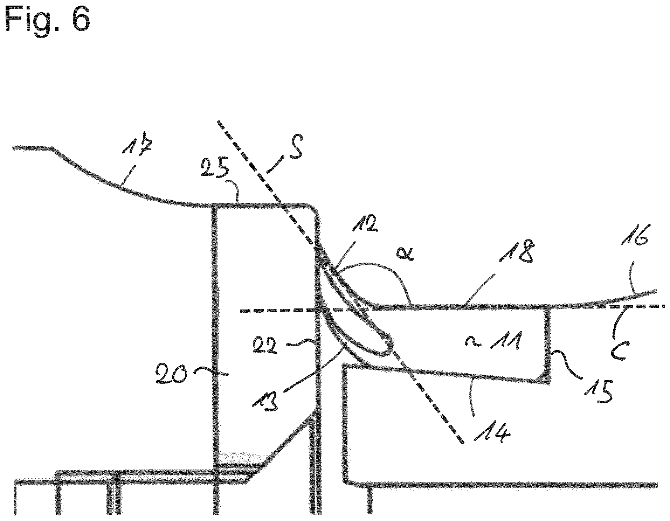

Further details of the configuration first sealing element 10 are described with respect to figure 6. Figure 6 shows again the configuration of the first sealing element 10 provided in the recessed seat in the outer surface of the first member 3, with the body 11 of the first sealing element extending in the axial direction and being arranged in the recess provided by the bottom wall 14 and the side wall 15 of the recess providing the seat, in an enlarged view.

On the side of the sealing lips, the recessed seat is open towards the axial direction, in order to allow the sealing lips 12 and 13 to extend from the axial side of the body 11 of sealing element 10 towards the axial sealing surface 22 facing the open side of the recess.

As can be seen from figure 6, the outer surface of the lip 12 extends, from the essentially cylindrical outer surface 18 of the body 11 of the sealing element 10, continuously towards the outside.

Further, the angle α of a tangent S to the outer surface of the sealing lip 12 with the outer surface 18 of the body 1 of the first sealing is bigger than 90 °, and in particular bigger than 110 °, in order to be easy to clean. The tangent S is measured at an axial mid-position between the axial sealing surface and the axial end of the seat for the first sealing element facing the axial sealing surface 22. However, the same is true for the tangent at very other position on the outer surface of the sealing lip 12 or the curved section connecting the outer surface of the sealing lip 12 with the essentially straight outer surface of the body 1. All these measurements are made in a cut along the axial direction.

Further, the position of the tip of the outer sealing lip 12 is radially displaced to the outside with respect to the external surface 18 of the body 11 of the sealing element 10, with a distance to the external surface 18 being at least 2 % and/or at maximum 20%, preferably at least 5 % and/or at maximum 10 % of the extension of the sealing lip in its axial direction.

Further, as visible in figure 6, the axial sealing surface 22 has a larger diameter than the external surface 18 of the body of the sealing element, in order to provide sufficient space for the sealing lip to touch the axial contact surface.

Regarding the further configuration of the first sealing element, the outer surface 18 of the body 11 of the sealing element provides a smooth transition to the external surface 16 of the first member 3, i.e. the diameter of the outer surface of the body 11 of the sealing element is the same as the outer diameter of the external surface 16 of the first member where the non-lip axial side of the body 11 contacts the axial side wall 15 of the recessed seat. Preferably, a tangent to the outer surface of the body 11 of the sealing element is parallel to a tangent to the external surface 16 of the first member at this position in a cut along the axial direction.

In the embodiment, the recessed seat is provided in a housing of the first member. The housing may be a cast element. In the embodiment, the external surface 16 of the first member 3 is provided at least in a region adjoining the recessed seat by processing the surface of the cast housing of the first member 3, in particular by material removal such as milling, grinding or polishing. In the embodiment, the external surface 16 of the first member 3 has a concave shape in a cut along the axial direction in a region adjoining the recessed seat, in order to improve the cleaning properties. The external surface 16 of the housing is preferably provided with a large radius for easy cleaning.

The recess in the outer surface of the first member 3 provided by the bottom wall 14 and the axial side wall 15 serves as a seat for the first sealing element 10. The surfaces of this seat, i.e. the bottom surface 14 and the side wall surface 15, are processed surfaces. In particular, the surfaces of the bottom wall 14 and the axial side wall 15 may be processed by material removal such as milling, grinding or polishing.

Thereby, an exact fit of the first sealing element 10, as well as a smooth transition between the external surface of the first sealing element and the external surface of the housing is provided, thus reducing the hygienic risk.

The first sealing element 10, which acts an axial seal, is designed to fit radially and axially into the seat provided by the recess in the outer surface of the first member 3. Axial contact between the axial end surface of the body 11 of the first sealing element on the non-lip side with side wall 15 is improved by providing the bottom wall 14 of the recess with a chamfer towards the side wall 15, i.e. with a smaller radius of the bottom wall 14 on the side of the side wall 15 than on the side of the sealing lip 12. Due to a radial preloading of the sealing element 10, this creates an axial force between the body 11 of the sealing element and the side wall 15 of the recess. As an option, an additional sealing function with side wall 15 can be provided by applying a sealant at this position.

Regular contact between the bottom wall of the first sealing element 11 and the sealing seat, i.e. the bottom wall 14 of the recess, is equally provided by the preloading the first sealing element 10, and in particular by making the inner diameter of the first sealing element smaller than the diameter of the seat, i.e. the diameter of the bottom wall 14. This radial contact first of all provides proper sealing between the body of the sealing element and the seat. Further, it provides a sufficiently high friction torque which is higher than the friction torque occurring between the sealing lip 12 and the axial sealing surface 22, thereby preventing the first sealing element from rotating on the seal seat.

In the embodiment, the sealing surface 22 on the second member 2 is provided by an axial plate member 20, with the axial sealing surface 22 formed by finely processing the axial surface of the plate member 20. Processing may e.g. be performed by material removal such as milling, grinding or polishing, and/or by providing a surface coating.

By using the axial plate member 20, the contact flange is provided by a precisely manufactured component, which is connected to the axial face of the housing of the second member 2. In the embodiment, the axial plate member 20 is connected to the housing by screws 19. The axial plate member 20 is provided with a positioning flange 26, which is radially positioned on the axial front surface of the second member 2.

The external circumferential surface 25 of the plate member 20 has the same diameter as the diameter of the housing of the second member 2 where it connects to the plate member 20, thereby providing a smooth transition between the circumferential surface 25 and the plate member 20 and the external surface 20 of the housing of the second member 2. A sealing compound may be applied to the contact between the axial plate member 20 and the axial and surface of the housing 17.

In the embodiment, the housing on the second member 2 is equally a cast housing, which rotates relative to the housing of the first member 3. As described above, the housing of the second member 2 serves as a support for the axial plate member 20. Further, it has a radially processed outer surface 17 to provide a smooth transition between the housing and the external surface 25 of the plate member 20, thus reducing the hygienic risk. The surface 17 is made with a large radius, which can be easily cleaned.

In the embodiment shown in figures 2 and 3, in addition to the first, outer axial sealing element 10, there is a second, inner sealing element 30 provided to seal the gap between the first and the second member 2, 3.

In the embodiment, the second sealing element 30 is connected to a seal seat arranged on the first member 3, i.e. the same member to which the first sealing element 10 is mounted. A sealing edge of the second sealing element 30 is in sliding contact with a sealing surface provided on the second member 2.

The seat for the second sealing element 30 is provided on the housing of the first member in which the seat for the first sealing element 10 is equally provided, with the seats being provided at an axially overlapping position as a recess in an outer and an inner circumferential surface of the housing of the first member 3.

This arrangement provides a specifically compact sealing arrangement of a first and a second sealing element.

The second sealing element 30 may be a standard oil or grease seal provided to seal the oil compartment of the joint surrounding the roller bearings 40 of the joint.

In the embodiment, the second sealing element 30 is a radial sealing element, i.e. its sealing edge is in contact with a radial sealing surface 24 of the second member 2.

In the embodiment shown in figures 2 and 3, the sealing surface for the second sealing element 30 is provided by the axial plate element 20, which also provides the axial sealing surface 22. For this purpose, at an inner side of the axial sealing surface 22, the plate element 30 is provided with a cylindrical section 23 extending towards the first member 3, providing the radial sealing surface 24 on its outer side.

In an alternative configuration, for example one used in other joints of the robot, the radial sealing surface 24 may also be provided by a separate element of the second member 2, such as a housing element or a bearing element of the joint.

In the embodiment shown in figures 2 and 3, the sealing arrangement comprises a third sealing element 35, providing an additional seal to the oil compartment. The second sealing element therefore only provides an additional sealing function between the first and the third sealing elements. In other configurations, for example those used for other joints of the robot, only the first and the second sealing elements may be used.

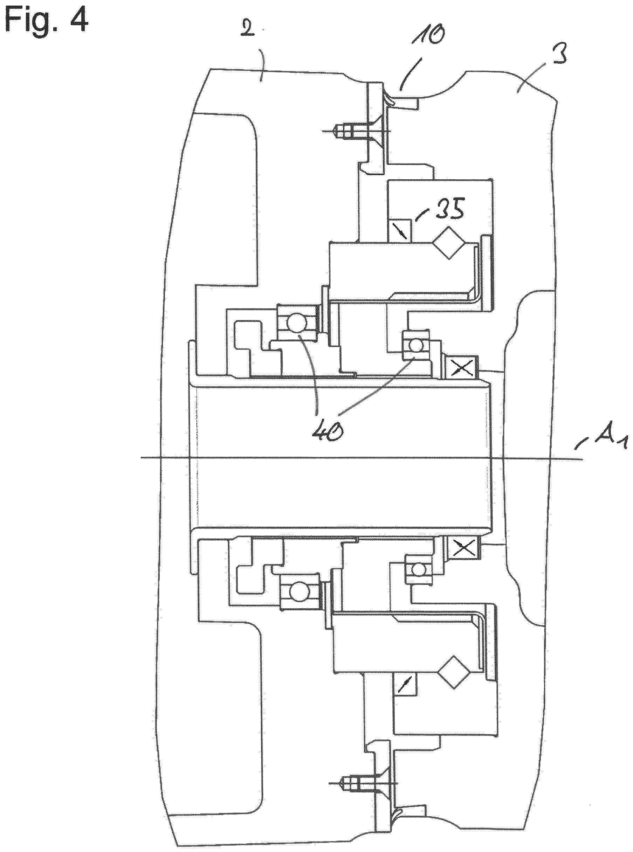

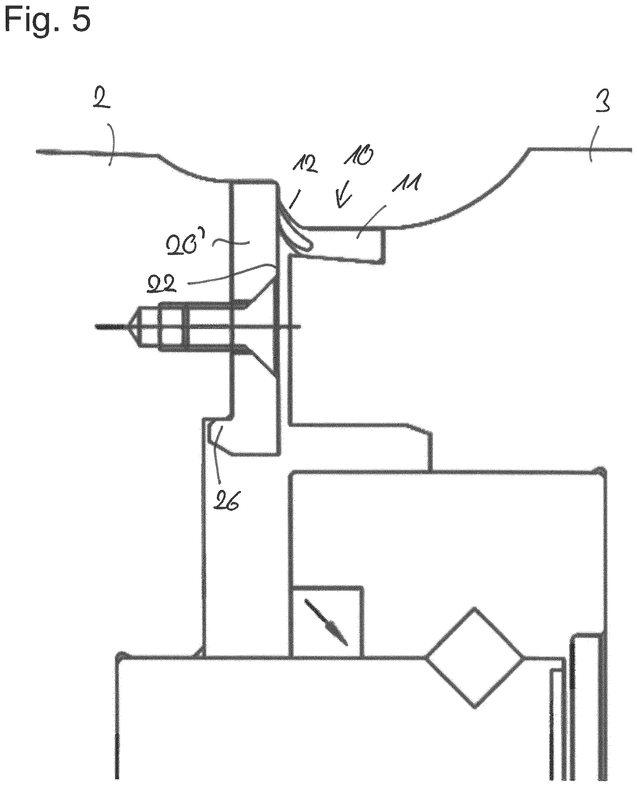

A second embodiment of the sealing arrangement according to the present invention is shown in figures 4 and 5.

The sealing arrangement shown in figures 4 and 5 is identical to the sealing arrangement shown in figures 2 and 3 but for the absence of the second sealing element and the corresponding radial sealing surface. In the configuration shown, the sealing is therefore only provided by the first sealing element and the third sealing element.

## Claims

1. A robot having at least a first and a second member connected by rotatable joint,
the joint comprising a sealing arrangement comprising at least a first sealing element for sealing a gap between the first and the second member,
wherein the first member comprises a recessed seat provided in a circumferential wall for accommodating a body of the first sealing element and the second member comprises an axial sealing surface in contact with a sealing lip of the first sealing element extending from the body of the first sealing element towards the axial sealing surface,
**characterized in that**
the outer surface of the sealing lip continuously extends from the outer surface of the body of the first sealing element radially outwards towards the axial sealing surface and/or the tip of the sealing lip extends to a radial position that is more distant from the axis of the joint than an outer surface of the body of the first sealing element.

2. The robot of claim 1, wherein the outer surface of the body of the first sealing element has, in a cut along an axial direction of the joint, an essentially flat part extending at an angle of less than 30° with respect to the axial direction, preferably at an angle of less than 10° and preferably extending essentially in the axial direction, wherein the outer surface of the sealing lip continuously merges into the essentially flat part in a curved section,
wherein preferably, a line tangential to the curved section has at every position an angle with respect to an axial direction of the joint of not more than 30° towards a radial inside in the direction towards the axial sealing surface and preferably is directed towards the radial outside in a direction towards the axial sealing surface.

3. A robot, in particular a according to any one of the preceding claims, having at least a first and a second member connected by rotatable joint,
the joint comprising a sealing arrangement comprising at least a first sealing element for sealing a gap between the first and the second member,
wherein the first member comprises a recessed seat provided in a circumferential wall for accommodating a body of the first sealing element and the second member comprises an axial sealing surface in contact with a sealing lip of the first sealing element extending from the body of the first sealing element towards the axial sealing surface,
**characterized in that**
the first sealing element has at least two sealing lips extending from the body of the first sealing element at a radial distance to each other towards the axial sealing surface.

4. The robot of claim 3, wherein the at least two sealing lips and the body of the first sealing element are integrally formed, and/or wherein the inner surface of the inner sealing lip continuously extends radially outwards towards the axial sealing surface, wherein preferably the inner surface of the inner sealing lip extends continuously or with a step from a bottom surface of the body of the first sealing element..

5. A robot, in particular a according to any one of the preceding claims, having at least a first and a second member connected by rotatable joint,
the joint comprising a sealing arrangement comprising at least a first sealing element for sealing a gap between the first and the second member,
wherein the first member comprises a recessed seat provided in a circumferential wall for accommodating a body of the first sealing element and the second member comprises an axial sealing surface in contact with a sealing lip of the first sealing element extending from the body of the first sealing element towards the axial sealing surface,
**characterized in that**,
the axial sealing surface is provided on an axial plate member connected to an axial end surface of a housing of the second member.

6. The robot of claim 5, wherein the axial plate member has an outer circumferential surface flushly transitioning to an outer surface of the housing of the second member.

7. The robot according to any one of the preceding claims, wherein the outer surface of the body of the sealing element flushly transitions to an outer surface of the circumferential wall section of the first member at a position opposite the axial sealing surface, wherein preferably an axial side surface of the body of the first sealing element abuts with an axial side surface of the recessed seat.

8. The robot according to any one of the preceding claims, wherein the bottom of the recessed seat provided in the circumferential wall section of the first member accommodating the body of the first sealing element has, at least in parts, a chamfer shape extending radially inwards towards the side wall of the recess opposite the sealing lip, the chamfer urging the body of the first sealing element into contact with the side wall, and/or wherein the first sealing element is mounted on the recessed seat with a radial preload.

9. The robot according to any one of the preceding claims, wherein the sealing arrangement comprises a second sealing element for sealing the gap between the first and the second member, the second sealing element being arranged inside with respect to the first sealing element.

10. The robot according to claim 9, wherein the second sealing element is mounted on a second seat of the first member and a sealing edge of the second sealing element is in sliding contract with a second sealing surface of the second member, wherein the second sealing surface preferably is a circumferential surface and/or wherein the second seat and the recessed seat accommodating the body of the first sealing element are arranged on an inside and an outside of a housing of the first member in an axially overlapping position.

11. The robot according to claim 10, wherein the second sealing surface is provided by a section of the axial plate member that also provides the axial sealing surface, preferably on a section extending in an axial direction from the axial sealing surface.

12. The robot according to one of claims 9 to 11, wherein the sealing arrangement comprises a third sealing element for sealing the gap between the first and the second member, the third sealing element being an oil seal arranged on an inside with respect to the second sealing element.

13. The robot according to any one of the preceding claims, comprising a plurality of rotatable joints.

14. The robot of claim 13, wherein a plurality of the rotatable joints and preferably all the rotatable joints are provided with a sealing arrangement as defined above for the joint between the first and the second member.

15. A first sealing element for a robot according to one of the preceding claims, the first sealing element comprising a body mountable to a seat with its circumferential bottom wall and having a sealing lip extending from the body in an axial direction,
**characterized in that**
the outer surface of the sealing lip continuously extends from the outer surface of the body of the first sealing element radially outwards in a direction away from the body and/or the tip of the sealing lip extends to a radial position that is more distant from the axis of the circumferential bottom wall of the body than an outer surface of the body of the first sealing element,
and/or wherein the first sealing element has at least two sealing lips extending from the body of the first sealing element at a radial distance to each other in an axial direction.
